# EUROPEAN PATENT SPECIFICATION

(11) **EP 3 850 874 B1**
(45) Date of publication and mention of the grant of the patent: **09.08.2023**
(21) Application number: 18933802.3
(22) Date of filing: 20.09.2018
(51) Int. Cl.: H04W 4/40, H04W 4/02

(54) **USER EQUIPMENT, BASE STATION, AND METHOD OF VEHICLE-TO-EVERYTHING COMMUNICATION OF SAME**
BENUTZERGERÄT, BASISSTATION UND VERFAHREN ZUR VEHICLE-TO-EVERYTHING-KOMMUNIKATION DAVON
ÉQUIPEMENT UTILISATEUR, STATION DE BASE ET PROCÉDÉ DE COMMUNICATION ENTRE LE VEHICULE ET TOUT L'ENVIRONNEMENT DE CELUI-CI

(43) Date of publication of application: 21.07.2021
(73) Proprietor: GUANGDONG OPPO MOBILE TELECOMMUNICATIONS CORP., LTD., Dongguan Guangdong 523860 (CN)
(72) Inventor: LIN, Huei-Ming, South Yarra, Victoria 3141 (AU); ZHAO, Zhenshan, Dongguan, Guangdong 523860 (CN); LU, Qianxi, Dongguan, Guangdong 523860 (CN)
(74) Representative: Manitz Finsterwald Patent- und Rechtsanwaltspartnerschaft mbB
(86) International application number: PCT/CN2018/106747
(87) International publication number: WO 2020/056680

(56) References cited:
- CN-A- 107 734 462
- CN-A- 107 925 970
- US-A1- 2017 280 406
- LENOVO ET AL: "Physical layer structures and procedure in NR V2X", 3GPP DRAFT; R1-1808554, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20180820 - 20180824 10 August 2018 (2018-08-10), XP051515931, Retrieved from the Internet: URL:http://www.3gpp.org/ftp/tsg%5Fran/WG1% 5FRL1/TSGR1%5F94/Docs/R1%2D1808554%2Ezip [retrieved on 2018-08-10]
- INTEL CORPORATION: "Offline Summary for NR-V2X Agenda Item - 7.2.4.1.4 Resource Allocation Mechanism", 3GPP DRAFT; R1-1809867, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 23 August 2018 (2018-08-23), pages 1-5, XP051517222, Retrieved from the Internet: URL:http://www.3gpp.org/ftp/tsg%5Fran/WG1% 5FRL1/TSGR1%5F94/Docs/R1%2D1809867%2Ezip
- INTEL CORPORATION: "Support of Sidelink Unicast, Groupcast and Broadcast Modes for NR V2X Communication", 3GPP DRAFT; R1-1808693 INTEL - EV2X_SL_UGB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20180820 - 20180824 11 August 2018 (2018-08-11), XP051516068, Retrieved from the Internet: URL:http://www.3gpp.org/ftp/tsg%5Fran/WG1% 5FRL1/TSGR1%5F94/Docs/R1%2D1808693%2Ezip [retrieved on 2018-08-11]

## Description

### BACKGROUND OF DISCLOSURE

### 1. Field of the Disclosure

The present disclosure relates to the field of communication systems, and more particularly, to a user equipment (UE), a base station (BS), and a method of vehicle-to-everything (V2X) communication of same.

### 2. Description of the Related Art

For an upcoming 5th generation new radio (5G-NR) sidelink (SL) communication, the technology aims to support more advanced vehicle-to-everything (V2X) use cases and wider range of services compared to current long term evolution V2X (LTE-V2X) system. For some use cases and services, which have already been defined and specified in 3rd generation partnership project (3GPP) service and system aspects working group 1 (SA1), it involves user equipment (UE) to participate in not only broadcast type of transmission but also need to support unicast and groupcast in order to improve spectral efficiency, lower latency, higher reliability, and longer communication range by enabling dynamic interactions between group of UEs at a physical layer (PHY).

In the current LTE-V2X system, only broadcast type of transmission is supported. When a radio resource control (RRC) connected UE is operating in network scheduling mode, SL resources for transmitting V2X data traffic are fully under control and management of a serving base station (BS). Whenever the UE needs to transmit V2X data messages, the UE first sends a scheduling request to the serving BS and then obtains an SL resource assignment grant, as long as the UE is still able to communicate with the serving BS. If UE experiences a bad radio condition (such as near a cell edge or in a coverage hole) or operating in a challenging radio environment (such as high interference, higher mobility and/or Doppler) where its radio connection with the serving BS is deteriorating, the serving BS can at any time switch and configure the UE to operate in a UE autonomous resource management mode. However, quality of service (QoS) can no longer be guaranteed by the serving BS. For the current LTE-V2X system, this system operating behavior may be adequate and acceptable, since V2X operation of each UE is independent from one another. That is, switching operation has minimal impact to other UEs in the field.

For unicast and groupcast communications in new radio V2X (NR-V2X), on other hand, a sudden or abrupt switching of operation from one mode to another can cause significant degradation and interruption to on-going V2X services, as selection of SL resources among member UEs in a same group is no longer carried out in a coordinated manner. Consequently, transmissions of SL messages from one or multiple UEs may not be receivable by others within the same group due to half-duplex constraint. Worse, transmitted messages can collide with one another, causing the whole V2X service to break down.

3GPP TSG RAN WG1 Meeting #94, Gothenburg, Sweden, August 20-24, 2018 (R1-808554) discloses how to carry HARQ ACK/NACK and channel state information considering higher reliability requirement. Proposal 1: the following sidelink physical signal/channel should be studied in NR V2X: synchronization signal and sidelink broadcast channel; sidelink control channel; sidelink data channel. Proposal 2: reuse the following sidelink communication modes for NR V2X: scheduling based communication mode, UE autonomous resource selection based communication mode. Proposal 3: link adaptation mechanism should be studies for both unicast and groupcast communication. Proposal 4: flexible numerology on different frequency spectrum can be studied. Proposal 5: for the waveform, DFT-s-OFDM and CP-OFDM can be studied.

3GPP TSG RAN WG1 Meeting #94, Gothenburg, Sweden, August 20-24, 2018 (R1-1808693) discusses principles of unicast, groupcast and broadcast sidelink communication for NR-V2X framework, while ensuring that all three modes can coexist sharing the same spectrum.

3GPP TSGRAN WG1 Meeting #94, Gothenburg, Sweden, August 20-24, 2018 (R1-1809867) provides a summary/input on the most important aspects of sidelink resource allocation for NR-V2X sidelink communication based on submitted contributions.

### SUMMARY

An object of the present disclosure is to propose a user equipment (UE), a base station (BS), and a method of vehicle-to-everything (V2X) communication of same capable of maintaining V2X service continuation and/or maintaining quality of V2X service. This object is solved by the subject matter of the independent claims.

The invention is set out in the appended set of claims. In a first aspect of the present disclosure, a user equipment (UE) in a vehicle-to-everything (V2X) communication system includes a memory, a transceiver, and a processor coupled to the memory and the transceiver. The processor is configured to participate with at least another UE in a group of UEs in a unicast session or a groupcast session. The UE is a member of the group of UEs. The processor is configured to control the transceiver to receive at least one cellular downlink (DL) signal and channel from a base station (BS), monitor at least one DL radio condition by measuring at least one first received signal strength and/or power based on the at least one cellular DL signal and channel, control the transceiver to report, to the BS, at least one measurement result of the at least one DL radio condition, and control the transceiver to receive assisted transfer configuration details from the BS. The assisted transfer configuration details include the BS assigning a local header for an on-going unicast session or an on-going groupcast session based on the at least one measurement result of the at least one DL radio condition.

In a second aspect of the present disclosure, a method of vehicle-to-everything (V2X) communication of a user equipment (UE) includes participating with at least another UE in a group of UEs in a unicast session or a groupcast session, receiving at least one cellular downlink (DL) signal and channel from a base station (BS), monitoring at least one DL radio condition by measuring at least one first received signal strength and/or power based on the at least one cellular DL signal and channel, reporting, to the BS, at least one measurement result of the at least one DL radio condition, and receiving assisted transfer configuration details from the BS. The UE is a member of the group of UEs. The assisted transfer configuration details include the BS assigning a local header for an on-going unicast session or an on-going groupcast session based on the at least one measurement result of the at least one DL radio condition.

In a third aspect of the present disclosure, a base station (BS) in a vehicle-to-everything (V2X) communication system includes a memory, a transceiver, and a processor coupled to the memory and the transceiver. The processor is configured to control the transceiver to transmit, to a user equipment (UE), at least one cellular downlink (DL) signal and channel, control the transceiver to receive at least one measurement result of at least one DL radio condition from the UE by the UE measuring at least one first received signal strength and/or power based on the at least one cellular DL signal and channel, assign a local header for an on-going unicast session or an on-going groupcast session based on the at least one measurement result of the at least one DL radio condition, and control the transceiver to inform, to the UE, assisted transfer configuration details. The UE participates with at least another UE in a group of UEs in a unicast session or a groupcast session. The UE is a member of the group of UEs. The assisted transfer configuration details include the processor assigning the local header for the on-going unicast session or the on-going groupcast session.

In a fourth aspect of the present disclosure, a method of vehicle-to-everything (V2X) communication of a base station (BS) includes transmitting, to a user equipment (UE), at least one cellular downlink (DL) signal and channel, receiving at least one measurement result of at least one DL radio condition from the UE by the UE measuring at least one first received signal strength and/or power based on the at least one cellular DL signal and channel, assigning a local header for an on-going unicast session or an on-going groupcast session based on the at least one measurement result of the at least one DL radio condition, and informing, to the UE, assisted transfer configuration details. The UE participates with at least another UE in a group of UEs in a unicast session or a groupcast session, The UE is a member of the group of UEs. The assisted transfer configuration details include assigning the local header for the on-going unicast session or the on-going groupcast session.

In the embodiment of the present disclosure, the user equipment (UE), the base station (BS), and the method of vehicle-to-everything (V2X) communication of same aim to solve current abrupt operating mode switching problem by maintaining a unified control and management of sidelink (SL) resources even when a radio connection to a serving BS is deteriorating or lost during unicast and groupcast sessions operating in network scheduling mode. To maintain a unified approach, it is proposed in the embodiment of the present disclosure to adopt an assisted transfer of SL resources control and management function from a centralized node (being the BS) to a localized node (denoted as the local header). By doing so, it helps to ensure continuation of on-going services, UEs continue to operate as a group (e.g. vehicle platooning), quality of service (QoS) is maintained, and in some cases without needing UEs to loss radio resource control (RRC) connection with a network.

### BRIEF DESCRIPTION OF DRAWINGS

In order to more clearly illustrate the embodiments of the present disclosure or related art, the following figures will be described in the embodiments are briefly introduced. It is obvious that the drawings are merely some embodiments of the present disclosure, a person having ordinary skill in this field can obtain other figures according to these figures without paying the premise.
FIG. 1 is a block diagram of a base station (BS) and a user equipment (UE) for performing a method of assisted transfer from centralized to localized resource control and management for mode 1 communication in a 5th generation new radio (5G-NR) vehicle-to-everything (V2X) communication system according to an embodiment of the present disclosure.
FIG. 2 is a flowchart illustrating a method of 5G-NR V2X communication of a UE according to an embodiment of the present disclosure.
FIG. 3 is a flowchart illustrating a method of 5G-NR V2X communication of a BS according to an embodiment of the present disclosure.
FIG. 4 is a schematic diagram of a BS and a UE for performing a method of assisted transfer from centralized to localized resource control and management for mode 1 communication in a 5th generation new radio (5G-NR) vehicle-to-everything (V2X) communication system according to an embodiment of the present disclosure.
FIG. 5 is an example flowchart illustrating sidelink (SL) resource control and management transfer to a road side unit (RSU) or a group member UE.
FIG. 6 is a block diagram of a system for wireless communication according to an embodiment of the present disclosure.

### DETAILED DESCRIPTION OF EMBODIMENTS

Embodiments of the present disclosure are described in detail with the technical matters, structural features, achieved objects, and effects with reference to the accompanying drawings as follows. Specifically, the terminologies in the embodiments of the present disclosure are merely for describing the purpose of the certain embodiment, but not to limit the disclosure.

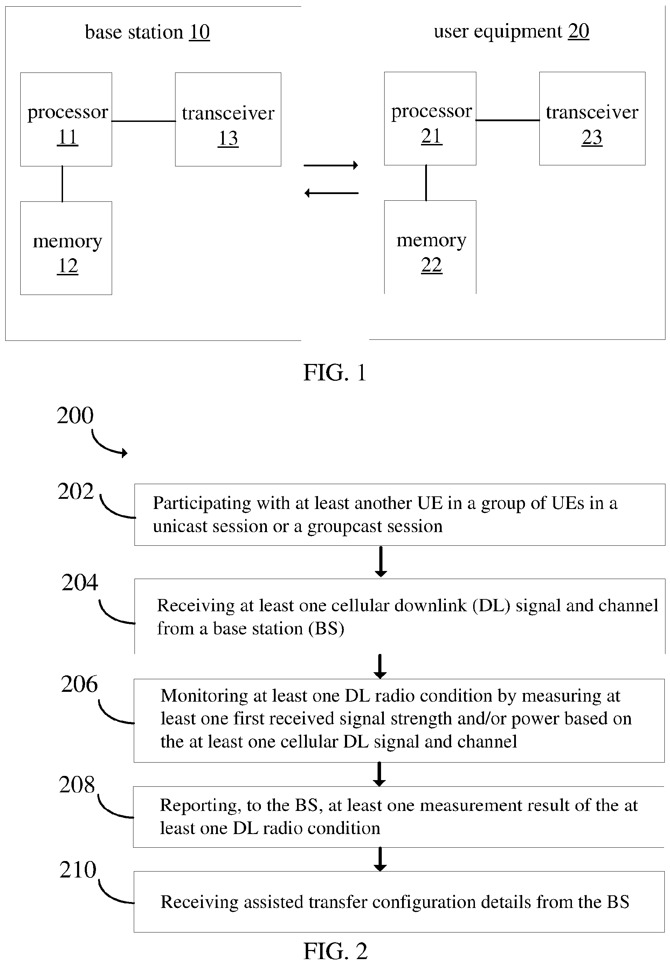

FIG. 1 illustrates that, in some embodiments, a base station (BS) 10 and a user equipment (UE) 20 for a method of assisted transfer from centralized to localized resource control and management for mode 1 communication in a 5th generation new radio (5G-NR) vehicle-to-everything (V2X) communication system according to an embodiment of the present disclosure. The BS 10 may include a processor 11, a memory 12 and a transceiver 13. The processor 11 may be configured to implement proposed functions, procedures and/or methods described in this description. Layers of radio interface protocol may be implemented in the processor 11. The memory 12 is operatively coupled with the processor 11 and stores a variety of information to operate the processor 11. The transceiver 13 is operatively coupled with the processor 11, and transmits and/or receives a radio signal.

The UE 20 may include a processor 21, a memory 22 and a transceiver 23. The processor 21 may be configured to implement proposed functions, procedures and/or methods described in this description. Layers of the radio interface protocol may be implemented in the processor 21. The memory 22 is operatively coupled with the processor 21 and stores a variety of information to operate the processor 21. The transceiver 23 is operatively coupled with the processor 21, and transmits and/or receives a radio signal.

The processors 11 and 21 may include application-specific integrated circuit (ASIC), other chipset, logic circuit and/or data processing device. The memories 12 and 22 may include read-only memory (ROM), random access memory (RAM), flash memory, memory card, storage medium and/or other storage device. The transceivers 13 and 23 may include baseband circuitry to process radio frequency signals. When the embodiments are implemented in software, the techniques described herein can be implemented with modules (e.g., procedures, functions, and so on) that perform the functions described herein. The modules can be stored in the memories 12 and 22 and executed by the processors 11 and 21. The memories 12 and 22 can be implemented within the processors 11 and 21 or external to the processors 11 and 21 in which case those can be communicatively coupled to the processors 11 and 21 via various means as is known in the art.

The communication between UEs relates to vehicle-to-everything (V2X) communication including vehicle-to-vehicle (V2V), vehicle-to-pedestrian (V2P), and vehicle-to-infrastructure/network (V2I/N) according to a sidelink technology developed under 3rd generation partnership project (3GPP) new radio (NR) Release 16 and beyond. UEs are communicated with each other directly via a sidelink interface such as a PC5 interface.

In some embodiments, the processor 21 is configured to participate with at least another UE in a group of UEs in a unicast session or a groupcast session. The UE 20 is a member of the group of UEs. The processor 21 is configured to control the transceiver 23 to receive at least one cellular downlink (DL) signal and channel from the BS 10, monitor at least one DL radio condition by measuring at least one first received signal strength and/or power based on the at least one cellular DL signal and channel, control the transceiver 23 to report, to the BS 10, at least one measurement result of the at least one DL radio condition, and control the transceiver 23 to receive assisted transfer configuration details from the BS 10. The assisted transfer configuration details include the BS 10 assigning a local header for an on-going unicast session or an on-going groupcast session based on the at least one measurement result of the at least one DL radio condition.

In some embodiments, the processor 11 is configured to control the transceiver 13 to transmit, to the UE 20, at least one cellular downlink (DL) signal and channel, control the transceiver 13 to receive at least one measurement result of at least one DL radio condition from the UE 20 by the UE 20 measuring at least one first received signal strength and/or power based on the at least one cellular DL signal and channel, assign a local header for an on-going unicast session or an on-going groupcast session based on the at least one measurement result of the at least one DL radio condition, and control the transceiver 13 to inform, to the UE 20, assisted transfer configuration details. The UE 20 participates with at least another UE in a group of UEs in a unicast session or a groupcast session. The UE 20 is a member of the group of UEs. The assisted transfer configuration details include the processor 11 assigning the local header for the on-going unicast session or the on-going groupcast session.

FIG. 2 illustrates a method 200 of 5G-NR V2X communication of the user equipment 20 according to an embodiment of the present disclosure.

The method 200 includes: at block 202, participating with at least another UE in a group of UEs in a unicast session or a groupcast session, at block 204, receiving at least one cellular downlink (DL) signal and channel from the BS 10, at block 206, monitoring at least one DL radio condition by measuring at least one first received signal strength and/or power based on the at least one cellular DL signal and channel, at block 208, reporting, to the BS 10, at least one measurement result of the at least one DL radio condition, and at block 210, receiving assisted transfer configuration details from the BS 10. The UE 20 is a member of the group of UEs. The assisted transfer configuration details include the BS 10 assigning a local header for an on-going unicast session or an on-going groupcast session based on the at least one measurement result of the at least one DL radio condition.

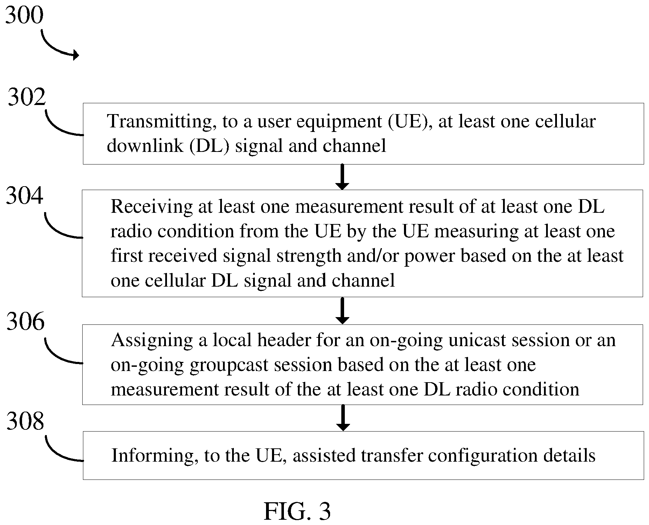

FIG. 3 illustrates a method 300 of 5G-NR V2X communication of the BS 10 according to an embodiment of the present disclosure.

The method 300 includes: at block 302, transmitting, to the UE 20, at least one cellular downlink (DL) signal and channel, at block 304, receiving at least one measurement result of at least one DL radio condition from the UE 20 by the UE 20 measuring at least one first received signal strength and/or power based on the at least one cellular DL signal and channel, at block 306, assigning a local header for an on-going unicast session or an on-going groupcast session based on the at least one measurement result of the at least one DL radio condition, and at block 308, informing, to the UE 20, assisted transfer configuration details. The UE 20 participates with at least another UE in a group of UEs in a unicast session or a groupcast session, The UE 20 is a member of the group of UEs. The assisted transfer configuration details include assigning the local header for the on-going unicast session or the on-going groupcast session.

In the embodiment of the present disclosure, the assisted transfer of SL resources control and management function from a centralized BS node to a localized header node, the process involves at least a BS gNodeB and a group of radio resource control (RRC) connected member UEs participating in a unicast or a groupcast session and operating in a DL-scheduling based mode 1. The localized header node could be a group member UE from the unicast or groupcast communication session or a road side unit (RSU) if available.

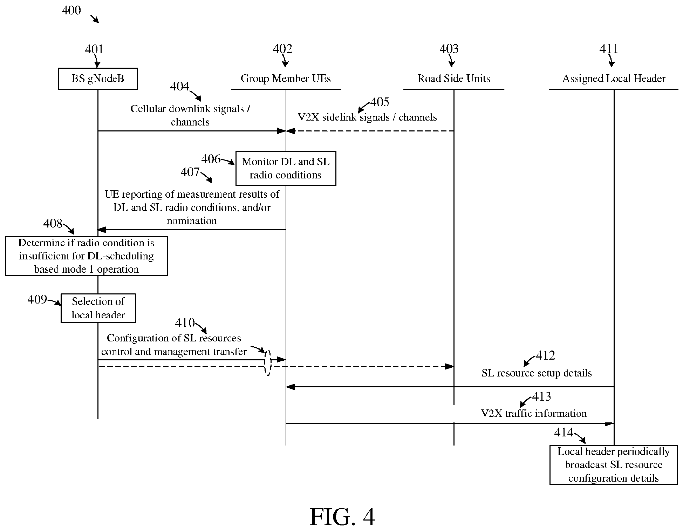

In reference to FIG. 4, a method 400 of assisted transfer from centralized to localized resource control and management for mode 1 communication in a 5th generation new radio (5G-NR) vehicle-to-everything (V2X) communication system is provided. RRC connected group member UEs 402 participating in a unicast or groupcast session receive cellular signals and channels 404 in a downlink from a serving BS gNB 401. At same time, the group member UEs 402 may also receive sidelink signals and channels 405 from nearby road side unit(s) 403 as part of their V2X communication. The cellular downlink (DL) signals and channels 404 can include primary synchronization signal (PSS), secondary synchronization signal (SSS), demodulation reference signal (DMRS), physical broadcast channel (PBCH), channel state information reference signal (CSI-RS), physical downlink control channel (PDCCH), and/or physical downlink shared channel (PDSCH). The combination of PSS, SSS and PBCH makes up a commonly known as synchronization signal block (SSB). Based on one or more of these received DL signals and channels, each group member UE 402 monitors DL radio conditions 406 by measuring received signal strength and/or power. Similarly, each group member UE can also monitor SL radio conditions 406 by measuring received signal strength and/or power based on SL signals and channels 405 transmitted by nearby RSU(s) 403. The SL signals and channel 405 may include sidelink synchronization signal (SLSS), DMRS for physical sidelink broadcast channel (PSBCH), physical sidelink control channel (PSCCH), physical sidelink shared channel (PSSCH), and discovery signal and channel.

Periodically, the group member UEs 402 at least report measurement results of DL radio conditions to the BS gNB 407. If an RSU is detected nearby and SL measurement results are available, the UEs 402 may be triggered to also reported SL radio conditions to the BS gNB 407. If more than one RSUs are detected, the UEs 402 may choose to nominate one of the detected RSUs to be the local header. Furthermore, the group member UEs 402 within same unicast or groupcast session also measure the received signals strength and/or power of each other's transmitted SL signals and channels. And if required (e.g. no local RSU is available, no local RSU is common to all group member UEs, or for the purpose of monitoring SL radio conditions between group member UEs), the BS gNB 401 may also triggers the group member UEs 402 to report these measurement results.

To determine if cellular downlink condition is sufficient to continue supporting DL-scheduling based mode 1 operation for an on-going unicast or groupcast session, the BS gNB 401 compares the reported DL measurement results from group member UEs against a pre-determined DL radio quality threshold value in a block 408. If it is determined that the DL radio condition is deteriorating and insufficient (e.g. reported measurement results from 50% or more group member UEs are below the threshold), the BS gNB 401 selects a local header for the on-going unicast/groupcast session based on the reported SL radio conditions from group member UEs 402 in a block 409, assigns the local header, and informs the selection to the group member UEs 402. Alternatively, the selection of the local header can be done by the group member UEs 402 based on their measurement results (e.g. a node having strongest average level) or based on a node is the vehicle platoon lead or randomly selected, and nominate the selection to the BS gNB 401.

The assigning of the local header and informing of the selection to group member UEs 402 are carried out by sending RRC configuration details in a line 410 to all involved nodes and UEs. And thus, the transferring of SL resources control and management function from a centralized BS node to a localized header for the on-going unicast or groupcast session. Dotted lines in FIG.4 denote all transmitted signals, channels, and configuration signaling to and from nearby RSU(s) 403. The configuration details for the assisted transfer in the line 410 include at least the assignment of a local header.

In a local header assignment, if the local header to be assigned is a BS-type RSU (same as BS gNB 401), the configuration to the local header RSU (dotted line) may not be necessary, since the transfer of SL resources control and management is within the same BS (with same MAC layer entity). All subsequent future control and management of SL resources may be conveyed to the group member UEs 402 via a sidelink PC5 interface instead of a DL Uu interface. The configuration to group member UEs 402 (solid line) is delivered via DL RRC signaling and includes a type of local header and an identification (ID) of the assigned local header. The ID of the assigned local header is a unique destination ID.

If the local header to be assigned is a BS-type RSU (a different BS, 403) or UE-type RSU 403, the embodiment is to transfer the control and management of SL resources to the selected local header, which is an RSU. The configuration information in the line 410 for the group member UEs 402 and the RSU 403 are same and include a type of local header and an identification (ID) of the assigned local header. The ID of the assigned local header is a unique destination ID.

If the local header to be assigned is one of the group member UEs 402, the configuration information for SL resource control and management transfer in the line 410 may only be conveyed to the group member UEs 402 in solid line. The configuration information is delivered via DL RRC signaling and includes a type of local header and an identification (ID) of the assigned local header. The ID of the assigned local header is a unique destination ID.

In addition, the configuration details in the line 410 may also include one or more of the following parameters and/or information including a start timing, by which the assigned local header will take over the function of controlling and managing SL resources for the on-going unicast or groupcast session. This could be represented as a time-offset to a current system frame number (SFN), a starting SFN, or an implicit/fixed offset (e.g. following SFN or 2 SFNs later). The following parameters and/or information may also include SL carrier(s), for which the assigned local header can assume control and management of SL resources for the on-going unicast or groupcast session, SL resource pool(s) within indicated carrier(s), for which the assigned local header can assume control and management of SL resources for the on-going unicast/groupcast session, and information to identify the on-going unicast/groupcast session including a group ID or session ID, a number of group member UEs, a type of transmission (unicast or groupcast), and/or IDs of all group member UEs.

Up on receiving the assisted transfer configuration details from the BS gNB 401, the assigned RSU or a group member UE assumes a role of local header 411 for the on-going unicast/groupcast session and sends out an SL resource setup configuration details in a line 412 to the group member UEs 402. The SL resource setup configuration details is transmitted over an SL PC5 interface e.g. via a V2I resource pool of the assigned resource pool(s) and/or carrier(s) from the line 410, and the details contain information relating to at least one of the followings.
1. Resource region(s) within the assigned resource pool(s) and/or carrier(s) from the line 410 that are to be used by the group member UEs 402 for the on-going unicast or groupcast session.
2. Synchronization resource configuration details to group member UEs 402 for transmitting SLSS and/or PSBCH.
3. SL resources for each group member UE 402 to provide its latest V2X traffic information (e.g. UE assistance information, buffer status report).

Based on the request from the local header, group member UEs 402 provide their V2X traffic information in a form of UE assistance information and/or buffer status report in a line 413. At same time, the assigned local header also periodically broadcast SL resource setup configuration details to surrounding UEs in proximity, informing the surrounding UEs a usage and reservation status of SL resources in a block 414.

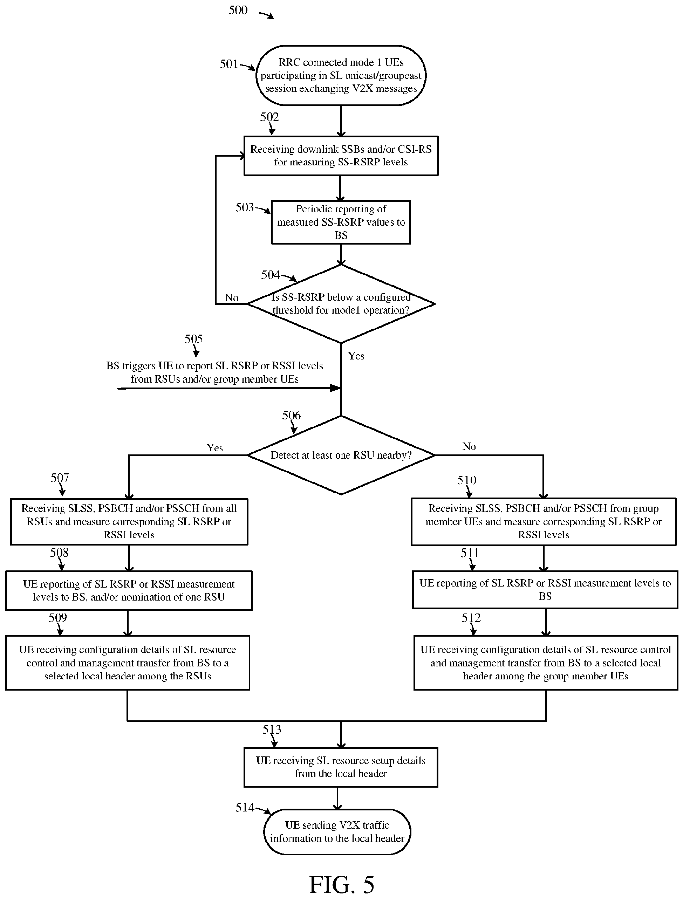

In reference to FIG. 5, an example flowchart 500 illustrating sidelink (SL) resource control and management transfer to a road side unit (RSU) or a group member UE is provided. For RRC connected mode 1 UEs participating in an SL unicast or groupcast session in a block 501 is to monitor radio conditions of the cellular Uu interface, the UEs measure synchronization signal reference signal received power (SS-RSRP) levels, based on received SSBs and/or CSI-RS in a downlink in a block, 502, and periodically report the measured results to their serving BS gNB in a block 503. If the measured SS-RSRP results are above a pre-defined or configured threshold for mode 1 operation, the UEs continue to monitor DL radio condition in the block 502. If the measured and/or 50% of the reported SS-RSRP levels are below the pre-defined or configured threshold for mode 1 operation in a block 504, the BS may trigger UEs or UE self-trigger to report radio conditions of sidelink (e.g. SL RSRP or RSSI levels) measured from RSU(s) and/or group member UEs in a block 505. Once triggered, the UE first determine any nearby RSU in proximity in a block 506 by detecting SLSS and/or PSBCH transmitted via for example a V2I resource pool. If at least one RSU is detected nearby, the UE measures SL RSRP and/or RSSI levels based on the received SLSS, PSBCH and/or PSSCH from all detected RSUs in a block 507 and report these measurement results to the BS in a block 508. At the same time, the UE may nominate one RSU to the BS to be the candidate local header, if there exist more than one potential candidates. Subsequently, the BS selects a local header among the reported RSU measurements and sending to the UE configuration details of SL resources control and management transfer from the BS to a selected local header in a block 509. If no nearby RSU is detected, each UE measures SL RSRP and/or RSSI levels based on the received SLSS, PSBCH and/or PSSCH from other group member UEs in a block 510 and report these measurement results to the BS in a block 511. Subsequently, the BS selects a local header among the reported group member UEs' measurements and sending to all group member UEs configuration details of SL resources control and management transfer from the BS to a selected local header in a block 512. Regardless of whether the selected local header is an RSU or a group member UE of a unicast/groupcast session, after the assignment of a selected local header, the local header provides details of SL resource setup details to the remaining group member UEs in a block 513. Then each of the said remaining group member UE sends its V2X traffic information to the local header for continuation of the unicast or groupcast session in a block 514.

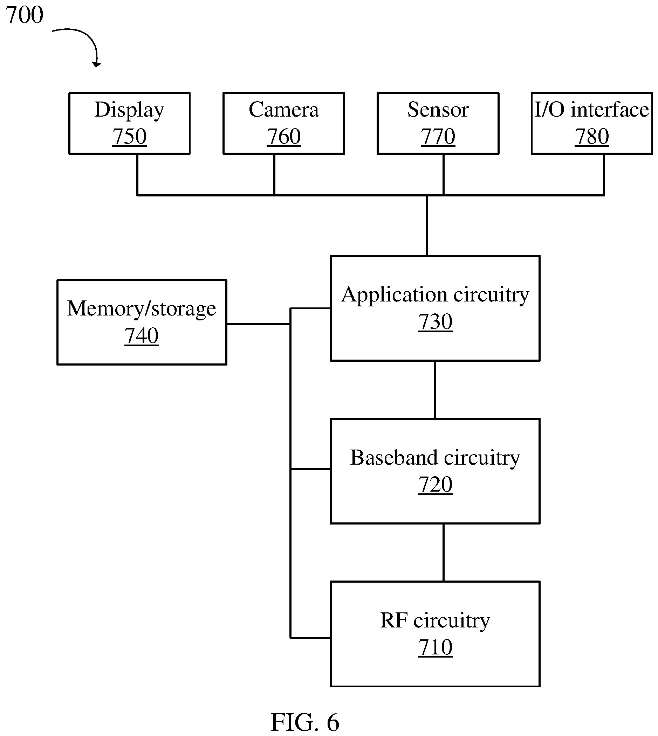

FIG. 6 is a block diagram of a system 700 for wireless communication according to an embodiment of the present disclosure. Embodiments described herein may be implemented into the system using any suitably configured hardware and/or software. FIG. 6 illustrates, for one embodiment, an example system 700 including a radio frequency (RF) circuitry 710, a baseband circuitry 720, an application circuitry 730, a memory/storage 740, a display 750, a camera 760, a sensor 770, and an input/output (I/O) interface 780, coupled with each other at least as illustrated.

The application circuitry 730 may include a circuitry such as, but not limited to, one or more single-core or multi-core processors. The processors may include any combination of general-purpose processors and dedicated processors, such as graphics processors, application processors. The processors may be coupled with the memory/storage and configured to execute instructions stored in the memory/storage to enable various applications and/or operating systems running on the system.

The baseband circuitry 720 may include circuitry such as, but not limited to, one or more single-core or multi-core processors. The processors may include a baseband processor. The baseband circuitry may handle various radio control functions that enables communication with one or more radio networks via the RF circuitry. The radio control functions may include, but are not limited to, signal modulation, encoding, decoding, radio frequency shifting, etc. In some embodiments, the baseband circuitry may provide for communication compatible with one or more radio technologies. For example, in some embodiments, the baseband circuitry may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry is configured to support radio communications of more than one wireless protocol may be referred to as multimode baseband circuitry.

In various embodiments, the baseband circuitry 720 may include circuitry to operate with signals that are not strictly considered as being in a baseband frequency. For example, in some embodiments, baseband circuitry may include circuitry to operate with signals having an intermediate frequency, which is between a baseband frequency and a radio frequency.

The RF circuitry 710 may enable communication with wireless networks using modulated electromagnetic radiation through a non-solid medium. In various embodiments, the RF circuitry may include switches, filters, amplifiers, etc. to facilitate the communication with the wireless network.

In various embodiments, the RF circuitry 710 may include circuitry to operate with signals that are not strictly considered as being in a radio frequency. For example, in some embodiments, RF circuitry may include circuitry to operate with signals having an intermediate frequency, which is between a baseband frequency and a radio frequency.

In various embodiments, the transmitter circuitry, control circuitry, or receiver circuitry discussed above with respect to the user equipment, eNB, or gNB may be embodied in whole or in part in one or more of the RF circuitry, the baseband circuitry, and/or the application circuitry. As used herein, "circuitry" may refer to, be part of, or include an Application Specific Integrated Circuit (ASIC), an electronic circuit, a processor (shared, dedicated, or group), and/or a memory (shared, dedicated, or group) that execute one or more software or firmware programs, a combinational logic circuit, and/or other suitable hardware components that provide the described functionality. In some embodiments, the electronic device circuitry may be implemented in, or functions associated with the circuitry may be implemented by, one or more software or firmware modules.

In some embodiments, some or all of the constituent components of the baseband circuitry, the application circuitry, and/or the memory/storage may be implemented together on a system on a chip (SOC).

The memory/storage 740 may be used to load and store data and/or instructions, for example, for system. The memory/storage for one embodiment may include any combination of suitable volatile memory, such as dynamic random access memory (DRAM)), and/or non-volatile memory, such as flash memory.

In various embodiments, the I/O interface 780 may include one or more user interfaces designed to enable user interaction with the system and/or peripheral component interfaces designed to enable peripheral component interaction with the system. User interfaces may include, but are not limited to a physical keyboard or keypad, a touchpad, a speaker, a microphone, etc. Peripheral component interfaces may include, but are not limited to, a non-volatile memory port, a universal serial bus (USB) port, an audio jack, and a power supply interface.

In various embodiments, the sensor 770 may include one or more sensing devices to determine environmental conditions and/or location information related to the system. In some embodiments, the sensors may include, but are not limited to, a gyro sensor, an accelerometer, a proximity sensor, an ambient light sensor, and a positioning unit. The positioning unit may also be part of, or interact with, the baseband circuitry and/or RF circuitry to communicate with components of a positioning network, e.g., a global positioning system (GPS) satellite.

In various embodiments, the display 750 may include a display, such as a liquid crystal display and a touch screen display. In various embodiments, the system 700 may be a mobile computing device such as, but not limited to, a laptop computing device, a tablet computing device, a netbook, an ultrabook, a smartphone, etc. In various embodiments, system may have more or less components, and/or different architectures. Where appropriate, methods described herein may be implemented as a computer program. The computer program may be stored on a storage medium, such as a non-transitory storage medium.

In the embodiment of the present disclosure, the user equipment (UE), the base station (BS), and the method of vehicle-to-everything (V2X) communication of same aim to solve current abrupt operating mode switching problem by maintaining a unified control and management of sidelink (SL) resources even when a radio connection to a serving BS is deteriorating or lost during unicast and groupcast sessions operating in network scheduling mode. To maintain a unified approach, it is proposed in the embodiment of the present disclosure to adopt an assisted transfer of SL resources control and management function from a centralized node (being the BS) to a localized node (denoted as the local header). By doing so, it helps to ensure continuation of on-going services, UEs continue to operate as a group (e.g. vehicle platooning), quality of service (QoS) is maintained, and in some cases without needing UEs to loss radio resource control (RRC) connection with a network. The embodiment of the present disclosure is a combination of techniques/processes that can be adopted in 3GPP specification to create an end product.

A person having ordinary skill in the art understands that each of the units, algorithm, and steps described and disclosed in the embodiments of the present disclosure are realized using electronic hardware or combinations of software for computers and electronic hardware. Whether the functions run in hardware or software depends on the condition of application and design requirement for a technical plan.

A person having ordinary skill in the art can use different ways to realize the function for each specific application while such realizations should not go beyond the scope of the present disclosure. It is understood by a person having ordinary skill in the art that he/she can refer to the working processes of the system, device, and unit in the above-mentioned embodiment since the working processes of the above-mentioned system, device, and unit are basically the same. For easy description and simplicity, these working processes will not be detailed.

It is understood that the disclosed system, device, and method in the embodiments of the present disclosure can be realized with other ways. The above-mentioned embodiments are exemplary only. The division of the units is merely based on logical functions while other divisions exist in realization. It is possible that a plurality of units or components are combined or integrated in another system. It is also possible that some characteristics are omitted or skipped. On the other hand, the displayed or discussed mutual coupling, direct coupling, or communicative coupling operate through some ports, devices, or units whether indirectly or communicatively by ways of electrical, mechanical, or other kinds of forms.

The units as separating components for explanation are or are not physically separated. The units for display are or are not physical units, that is, located in one place or distributed on a plurality of network units. Some or all of the units are used according to the purposes of the embodiments. Moreover, each of the functional units in each of the embodiments can be integrated in one processing unit, physically independent, or integrated in one processing unit with two or more than two units.

If the software function unit is realized and used and sold as a product, it can be stored in a readable storage medium in a computer. Based on this understanding, the technical plan proposed by the present disclosure can be essentially or partially realized as the form of a software product. Or, one part of the technical plan beneficial to the conventional technology can be realized as the form of a software product. The software product in the computer is stored in a storage medium, including a plurality of commands for a computational device (such as a personal computer, a server, or a network device) to run all or some of the steps disclosed by the embodiments of the present disclosure. The storage medium includes a USB disk, a mobile hard disk, a read-only memory (ROM), a random access memory (RAM), a floppy disk, or other kinds of media capable of storing program codes.

While the present disclosure has been described in connection with what is considered the most practical and preferred embodiments, it is understood that the present disclosure is not limited to the disclosed embodiments but is intended to cover various arrangements made without departing from the scope of the appended claims

## Claims

1. A user equipment, UE (20), for use in a vehicle-to-everything, V2X, communication system, the UE (20) comprising:
a memory (22);
a transceiver (23); and
a processor (21) coupled to the memory (22) and the transceiver (23),
wherein the processor (21) is configured to:
participate with at least another UE (20) in a group of UEs (20) in a unicast session or a groupcast session, wherein the UE (20) is a member of the group of UEs (20);
control the transceiver (23) to receive at least one cellular downlink, DL, signal and channel from a base station, BS;
monitor at least one DL radio condition by measuring at least one first received signal strength and/or power based on the at least one cellular DL signal and channel;
control the transceiver (23) to report, to the BS, at least one measurement result of the at least one DL radio condition; and
control the transceiver (23) to receive assisted transfer configuration details from the BS, wherein the assisted transfer configuration details comprise the BS assigning a local header for an on-going unicast session or an on-going groupcast session based on the at least one measurement result of the at least one DL radio condition.

2. The UE (20) of claim 1, wherein the transceiver (23) is configured to receive sidelink, SL, resource setup configuration details from the local header, and the transceiver (23) is configured to provide V2X traffic information in a form of UE assistance information, UEAI, and/or a buffer status report, BSR, based on a request from the local header, wherein the local header is one of at least one nearby road side unit, RSU, or the local header is a group member UE (20) of the group of UEs (20).

3. The UE (20) of claim 2, wherein the transceiver (23) is configured to receive usage and reservation status of SL resources by the local header periodically broadcasting the SL resource setup configuration details.

4. The UE (20) of any one of claims 1 to 3, wherein the transceiver (23) is configured to receive at least one SL signal and channel from at least one nearby RSU and/or one group member UE (20) of the group of UEs (20), wherein the at least one SL signal and channel comprise a sidelink synchronization signal, SLSS, a demodulation reference signal, DMRS, for a physical sidelink broadcast channel, PSBCH, a physical sidelink control channel, PSCCH, a physical sidelink shared channel, PSSCH, and a discovery signal and channel.

5. The UE (20) of claim 4, wherein the processor (21) is configured to monitor at least one SL radio condition by measuring at least one second received signal strength and/or power based on the at least one SL signal and channel transmitted by the at least one nearby RSU and/or one group member UE (20) of the group of UEs (20).

6. The UE (20) of claim 5, wherein the transceiver (23) is configured to report, to the BS, at least one measurement result of the at least one SL radio condition.

7. The UE (20) of any one of claims 1 to 6, wherein the assisted transfer configuration details comprise a start timing of the local header taking over a function of controlling and managing SL resources for the on-going unicast session or the on-going groupcast session, at least one SL carrier, at least one SL resource pool within the at least one SL carrier, and/or information to identify the on-going unicast session or the on-going groupcast session.

8. The UE (20) of any one of claims 1 to 7, wherein the processor (21) is configured to measure at least one synchronization signal reference signal received power, SS-RSRP, level based on at least one synchronization signal block, SSB, and/or channel state information reference signal, CSI-RS, in a downlink, wherein if the at least one SS-RSRP level is above a pre-defined or configured threshold for a mode 1 operation, the processor (21) continues to monitor the at least one DL radio condition, and if the at least one SS-RSRP level and/or 50% of the reported SS-RSRP levels are below the pre-defined or configured threshold for the mode 1 operation, the BS triggers the processor (21) or the processor (21) self-triggers to report at least one SL RSRP or received signal strength indicator, RSSI, level measured from at least one nearby RSU and/or group member UEs (20) of the group of UEs (20).

9. The UE (20) of claim 8, wherein if at least one RSU is detected nearby, the processor (21) measures the at least one SL RSRP and/or RSSI level based on a received SLSS, PSBCH and/or PSSCH from all detected RSUs and report at least one corresponding measurement result to the BS, and/or the processor (21) nominates one RSU to the BS to be a candidate local header if there exist more than one potential candidates.

10. The UE (20) of claim 8, wherein the transceiver (23) is configured to receive configuration details of SL resources control and management transfer from the BS to a selected local header.

11. A method of vehicle-to-everything, V2X, communication of a user equipment, UE, the method comprising:
participating (202) with at least another UE in a group of UEs in a unicast session or a groupcast session, wherein the LTE is a member of the group of UEs;
receiving (204) at least one cellular downlink, DL, signal and channel from a base station, BS;
monitoring (206) at least one DL radio condition by measuring at least one first received signal strength and/or power based on the at least one cellular DL signal and channel;
reporting (208), to the BS, at least one measurement result of the at least one DL radio condition; and
receiving (210) assisted transfer configuration details from the BS, wherein the assisted transfer configuration details comprise the BS assigning a local header for an on-going unicast session or an on-going groupcast session based on the at least one measurement result of the at least one DL radio condition.

12. The method of claim 11, further comprising receiving sidelink, SL, resource setup configuration details from the local header, and providing V2X traffic information in a form of UE assistance information, UEAI, and/or a buffer status report, BSR, based on a request from the local header, wherein the local header is one of at least one nearby road side unit, RSU, or the local header is a group member UE of the group of UEs.

13. The method of claim 12, further comprising receiving usage and reservation status of SL resources by the local header periodically broadcasting the SL resource setup configuration details.

14. The method of any one of claims 11 to 13, further comprising receiving at least one SL signal and channel from at least one nearby RSU and/or one group member UE of the group of UEs, wherein the at least one SL signal and channel comprise a sidelink synchronization signal, SLSS, a demodulation reference signal, DMRS for a physical sidelink broadcast channel, PSBCH, a physical sidelink control channel, PSCCH, a physical sidelink shared channel, PSSCH, and a discovery signal and channel.

15. The method of claim 14, further comprising monitoring at least one SL radio condition by measuring at least one second received signal strength and/or power based on the at least one SL signal and channel transmitted by the at least one nearby RSU and/or one group member UE of the group of UEs.

## Patentansprüche

1. Benutzergerät, UE (20), zur Verwendung in einem Fahrzeug-zu-Allem- bzw. V2X-Kommunikationssystem, wobei das UE (20) umfasst:
einen Speicher (22);
einen Sendeempfänger (23); und
einen Prozessor (21), der mit dem Speicher (22) und dem Sendeempfänger (23) gekoppelt ist, wobei der Prozessor (21) ausgelegt ist zum:
Teilnehmen, mit mindestens einem anderen UE (20) in einer Gruppe von UEs (20), an einer Unicast-Sitzung oder einer Groupcast-Sitzung, wobei das UE (20) ein Mitglied der Gruppe von UEs (20) ist;
Steuern des Sendeempfängers (23), um mindestens ein zellulares Downlink- bzw. DL-Signal und mindestens einen zellularen DL-Kanal von einer Basisstation, BS, zu empfangen;
Überwachen mindestens eines DL-Funkzustands durch Messen mindestens einer ersten Empfangssignalstärke und/oder -leistung basierend auf dem mindestens einen zellularen DL-Signal und -Kanal;
Steuern des Sendeempfängers (23), um mindestens ein Messergebnis des mindestens einen DL-Funkzustands an die BS zu melden; und
Steuern des Sendeempfängers (23), um Konfigurationsdetails für unterstützte Transfers von der BS zu empfangen, wobei die Konfigurationsdetails für unterstützte Transfers umfassen, dass die BS einen lokalen Header für eine laufende Unicast-Sitzung oder eine laufende Groupcast-Sitzung basierend auf dem mindestens einen Messergebnis des mindestens einen DL-Funkzustands zuweist.

2. UE (20) nach Anspruch 1, wobei der Sendeempfänger (23) dazu ausgelegt ist, Sidelink- bzw. SL-Ressourceneinrichtungskonfigurationsdetails von dem lokalen Header zu empfangen, und der Sendeempfänger (23) dazu ausgelegt ist, V2X-Verkehrsinformationen in Form von UE-Unterstützungsinformationen, UEAI, und/oder eines Pufferstatusberichts, BSR, basierend auf einer Anforderung vom lokalen Header bereitzustellen, wobei der lokale Header einer von mindestens einer nahegelegenen Straßenrandeinheit, RSU, ist oder der lokale Header ein Gruppenmitglied-UE (20) der Gruppe von UEs (20) ist.

3. UE (20) nach Anspruch 2, wobei der Sendeempfänger (23) dazu ausgelegt ist, einen Nutzungs- und Reservierungsstatus von SL-Ressourcen zu empfangen, indem der lokale Header die SL-Ressourceneinrichtungskonfigurationsdetails periodisch übermittelt.

4. UE (20) nach einem der Ansprüche 1 bis 3, wobei der Sendeempfänger (23) dazu ausgelegt ist, mindestens ein SL-Signal und mindestens einen SL-Kanal von mindestens einer nahegelegenen RSU und/oder einem Gruppenmitglied-UE (20) der Gruppe von UEs (20) zu empfangen, wobei das mindestens eine SL-Signal und der mindestens eine SL-Kanal ein Sidelink-Synchronisationssignal, SLSS, ein Demodulationsreferenzsignal, DMRS, für einen physischen Sidelink-Broadcast-Kanal, PSBCH, einen physischen Sidelink-Steuerkanal, PSCCH, einen physischen gemeinsam genutzten Sidelink-Kanal, PSSCH, und ein Entdeckungssignal und einen Entdeckungskanal umfassen.

5. UE (20) nach Anspruch 4, wobei der Prozessor (21) dazu ausgelegt ist, mindestens einen SL-Funkzustand durch Messen mindestens einer zweiten Empfangssignalstärke und/oder -leistung basierend auf dem mindestens einen SL-Signal und dem mindestens einen SL-Kanal, die durch die mindestens eine nahegelegene RSU und/oder ein Gruppenmitglied-UE (20) der Gruppe von UEs (20) übertragen werden, zu überwachen.

6. UE (20) nach Anspruch 5, wobei der Sendeempfänger (23) dazu ausgelegt ist, mindestens ein Messergebnis des mindestens einen SL-Funkzustands an die BS zu melden.

7. UE (20) nach einem der Ansprüche 1 bis 6, wobei die Konfigurationsdetails für unterstützte Transfers einen Startzeitpunkt für den lokalen Header, eine Funktion des Steuerns und Verwaltens von SL-Ressourcen für die laufende Unicast-Sitzung oder die laufende Groupcast-Sitzung zu übernehmen, mindestens einen SL-Träger, mindestens einen SL-Ressourcenpool in dem mindestens einen SL-Träger und/oder Informationen zum Identifizieren der laufenden Unicast-Sitzung oder der laufenden Groupcast-Sitzung umfassen.

8. UE (20) nach einem der Ansprüche 1 bis 7, wobei der Prozessor (21) dazu ausgelegt ist, mindestens einen Pegel einer Synchronisationssignal-Referenzsignalempfangsleistung, SS-RSRP, basierend auf mindestens einem Synchronisationssignalblock, SSB, und/oder einem Kanalzustandsinformationen-Referenzsignal, CSI-RS, in einem Downlink zu messen, wobei, falls der mindestens eine SS-RSRP-Pegel über einer vordefinierten oder konfigurierten Schwelle für einen Modus-1-Betrieb liegt, der Prozessor (21) damit fortfährt, den mindestens einen DL-Funkzustand zu überwachen, und falls der mindestens eine SS-RSRP-Pegel und/oder 50 % der gemeldeten SS-RSRP-Pegel unter der vordefinierten oder konfigurierten Schwelle für den Modus-1-Betrieb liegen, die BS den Prozessor (21) auslöst, oder der Prozessor (21) sich selbst auslöst, um mindestens einen SL-RSRP-Pegel oder Empfangssignalstärkeindikator- bzw. RSSI-Pegel zu melden, der von mindestens einer nahegelegenen RSU und/oder Gruppenmitglied-UEs (20) der Gruppe von UEs (20) gemessen wird.

9. UE (20) nach Anspruch 8, wobei, falls mindestens eine RSU in der Nähe detektiert wird, der Prozessor (21) den mindestens einen SL-RSRP- und/oder RSSI-Pegel basierend auf einem empfangenen SLSS, PSBCH und/oder PSSCH von allen detektierten RSUs misst und mindestens ein entsprechendes Messergebnis an die BS meldet, und/oder der Prozessor (21) eine RSU für die BS als einen lokalen Kandidaten-Header nominiert, falls es mehr als einen potenziellen Kandidaten gibt.

10. UE (20) nach Anspruch 8, wobei der Sendeempfänger (23) dazu ausgelegt ist, Konfigurationsdetails eines SL-Ressourcen-Steuerungs- und -Verwaltungstransfers von der BS zu einem ausgewählten lokalen Header zu empfangen.

11. Verfahren zur Fahrzeug-zu-Allem- bzw. V2X-Kommunikation eines Benutzergeräts, UE, wobei das Verfahren umfasst:
Teilnehmen (202), mit mindestens einem anderen UE in einer Gruppe von UEs, an einer Unicast-Sitzung oder einer Groupcast-Sitzung, wobei das UE ein Mitglied der Gruppe von UEs ist;
Empfangen (204) mindestens eines zellularen Downlink- bzw. DL-Signals und -Kanals von einer Basisstation, BS;
Überwachen (206) mindestens eines DL-Funkzustands durch Messen mindestens einer ersten Empfangssignalstärke und/oder -leistung basierend auf dem mindestens einen zellularen DL-Signal und -Kanal;
Melden (208), an die BS, mindestens eines Messergebnisses des mindestens einen DL-Funkzustands; und
Empfangen (210) von Konfigurationsdetails für unterstützte Transfers von der BS, wobei die Konfigurationsdetails für unterstützte Transfers umfassen, dass die BS einen lokalen Header für eine laufende Unicast-Sitzung oder eine laufende Groupcast-Sitzung basierend auf dem mindestens einen Messergebnis des mindestens einen DL-Funkzustands zuweist.

12. Verfahren nach Anspruch 11, ferner umfassend Empfangen von Sidelink- bzw. SL-Ressourceneinrichtungskonfigurationsdetails von dem lokalen Header, und Bereitstellen von V2X-Verkehrsinformationen in Form von UE-Unterstützungsinformationen, UEAI, und/oder eines Pufferstatusberichts, BSR, basierend auf einer Anforderung vom lokalen Header, wobei der lokale Header einer von mindestens einer nahegelegenen Straßenrandeinheit, RSU, ist oder der lokale Header ein Gruppenmitglied-UE der Gruppe von UEs ist.

13. Verfahren nach Anspruch 12, ferner umfassend Empfangen eines Nutzungs- und Reservierungsstatus von SL-Ressourcen, indem der lokale Header die SL-Ressourceneinrichtungskonfigurationsdetails periodisch übermittelt.

14. Verfahren nach einem der Ansprüche 11 bis 13, ferner umfassend Empfangen mindestens eines SL-Signals und -Kanals von mindestens einer nahegelegenen RSU und/oder einem Gruppenmitglied-UE der Gruppe von UEs, wobei das mindestens eine SL-Signal und der mindestens eine SL-Kanal ein Sidelink-Synchronisationssignal, SLSS, ein Demodulationsreferenzsignal, DMRS, für einen physischen Sidelink-Broadcast-Kanal, PSBCH, einen physischen Sidelink-Steuerkanal, PSCCH, einen physischen gemeinsam genutzten Sidelink-Kanal, PSSCH, und ein Entdeckungssignal und einen Entdeckungskanal umfassen.

15. Verfahren nach Anspruch 14, ferner umfassend Überwachen mindestens eines SL-Funkzustands durch Messen mindestens einer zweiten Empfangssignalstärke und/oder -leistung basierend auf dem mindestens einen SL-Signal und dem mindestens einen SL-Kanal, die durch die mindestens eine nahegelegene RSU und/oder ein Gruppenmitglied-UE der Gruppe von UEs übertragen werden.

## Revendications

1. Équipement utilisateur, UE, (20) destiné à être utilisé dans un système de communication de type véhicule-à-tout, V2X, l'UE (20) comprenant :
une mémoire (22) ;
un émetteur-récepteur (23) ; et
un processeur (21) couplé à la mémoire (22) et à l'émetteur-récepteur (23),
le processeur (21) étant configuré pour :
participer, avec au moins un autre UE (20) dans un groupe d'UE (20), à une session de diffusion individuelle ou une session de diffusion groupée, l'UE (20) étant membre du groupe d'UE (20) ;
commander à l'émetteur-récepteur (23) de recevoir au moins un signal et un canal cellulaires sur la liaison descendante, DL, provenant d'une station de base, BS ;
surveiller au moins une condition radio sur la DL en mesurant au moins une première intensité et/ou une première puissance de signal reçues/reçue sur la base des au moins un signal et un canal cellulaires sur la DL ;
commander à l'émetteur-récepteur (23) de notifier, à la BS, au moins un résultat de mesure de l'au moins une condition radio sur la DL ; et
commander à l'émetteur-récepteur (23) de recevoir des détails de configuration de transfert assisté provenant de la BS, les détails de configuration de transfert assisté comprenant l'assignation, par la BS, d'un noeud de tête local pour une session de diffusion individuelle en cours ou une session de diffusion groupée en cours sur la base de l'au moins un résultat de mesure de l'au moins une condition radio sur la DL.

2. UE (20) selon la revendication 1, dans lequel l'émetteur-récepteur (23) est configuré pour recevoir des détails de configuration d'établissement de ressources sur la liaison latérale, SL, provenant du noeud de tête local, et l'émetteur-récepteur (23) est configuré pour fournir des informations de trafic V2X sous forme d'informations d'assistance d'UE, UEAI, et/ou d'un rapport d'état de tampon, BSR, sur la base d'une requête provenant du noeud de tête local, le noeud de tête local étant soit au moins une unité de bord de route, RSU, de proximité soit un UE membre de groupe (20) du groupe d'UE (20) .

3. UE (20) selon la revendication 2, dans lequel l'émetteur-récepteur (23) est configuré pour recevoir un état d'utilisation et de réservation de ressources sur la SL par diffusion périodique, par le noeud de tête local, des détails de configuration d'établissement de ressources sur la SL.

4. UE (20) selon l'une quelconque des revendications 1 à 3, dans lequel l'émetteur-récepteur (23) est configuré pour recevoir au moins un signal et un canal sur la SL provenant d'au moins une RSU de proximité et/ou d'un UE membre de groupe (20) du groupe d'UE (20), les au moins un signal et un canal sur la SL comprenant un signal de synchronisation sur la liaison latérale, SLSS, un signal de référence de démodulation, DMRS, pour un canal physique de diffusion sur la liaison latérale, PSBCH, un canal physique de commande sur la liaison latérale, PSCCH, un canal physique partagé sur la liaison latérale, PSSCH, et un signal et un canal de découverte.

5. UE (20) selon la revendication 4, dans lequel le processeur (21) est configuré pour surveiller au moins une condition radio sur la SL en mesurant au moins une deuxième intensité et/ou une deuxième puissance de signal reçues/reçue sur la base des au moins un signal et un canal sur la SL transmis par l'au moins une RSU de proximité et/ou un UE membre de groupe (20) du groupe d'UE (20) .

6. UE (20) selon la revendication 5, dans lequel l'émetteur-récepteur (23) est configuré pour notifier, à la BS, au moins un résultat de mesure de l'au moins une condition radio sur la SL.

7. UE (20) selon l'une quelconque des revendications 1 à 6, dans lequel les détails de configuration de transfert assisté comprennent un temps de début où le noeud de tête local assume une fonction de commande et de gestion de ressources sur la SL pour la session de diffusion individuelle en cours ou la session de diffusion groupée en cours, au moins une porteuse sur la SL, au moins un pool de ressources sur la SL au sein de l'au moins une porteuse sur la SL, et/ou des informations pour identifier la session de diffusion individuelle en cours ou la session de diffusion groupée en cours.

8. UE (20) selon l'une quelconque des revendications 1 à 7, dans lequel le processeur (21) est configuré pour mesurer au moins un niveau d'une puissance reçue de signal de référence - signal de synchronisation, SS-RSRP, sur la base d'au moins un bloc de signaux de synchronisation, SSB, et/ou d'un signal de référence - informations d'état de canal, CSI-RS, sur une liaison descendante ; si l'au moins un niveau de SS-RSRP est au-dessus d'un seuil prédéfini ou configuré pour un fonctionnement en mode 1, le processeur (21) continuant de surveiller l'au moins une condition radio sur la DL et, si l'au moins un niveau de SS-RSRP et/ou 50% des niveaux de SS-RSRP notifiés sont au-dessous du seuil prédéfini ou configuré pour le fonctionnement en mode 1, la BS déclenchant le processeur (21), ou le processeur (21) se déclenchant automatiquement, pour notifier au moins un niveau de RSRP ou d'indicateur d'intensité de signal reçue, RSSI, sur la SL mesuré à partir d'au moins une RSU de proximité et/ou d'UE membres de groupe (20) du groupe d'UE (20).

9. UE (20) selon la revendication 8, dans lequel, si au moins une RSU est détectée à proximité, le processeur (21) mesure l'au moins un niveau de RSRP et/ou de RSSI sur la SL sur la base d'un SLSS, PSBCH et/ou PSSCH reçus en provenance de toutes les RSU détectées et notifie au moins un résultat de mesure correspondant à la BS, et/ou le processeur (21) désigne une RSU auprès de la BS comme noeud de tête local candidat s'il existe plus d'un candidat potentiel.

10. UE (20) selon la revendication 8, dans lequel l'émetteur-récepteur (23) est configuré pour recevoir des détails de configuration relatifs à la commande et au transfert de gestion de ressources sur la SL depuis la BS vers un noeud de tête local sélectionné.

11. Procédé de communication de type véhicule-à-tout, V2X, d'un équipement utilisateur, UE, le procédé comprenant :
la participation (202), avec au moins un autre UE dans un groupe d'UE, à une session de diffusion individuelle ou une session de diffusion groupée, l'UE étant membre du groupe d'UE ;
la réception (204) d'au moins un signal et un canal cellulaires sur la liaison descendante, DL, provenant d'une station de base, BS ;
la surveillance (206) d'au moins une condition radio sur la DL par mesure d'au moins une première intensité et/ou une deuxième puissance de signal reçues/reçue sur la base des au moins un signal et un canal cellulaires sur la DL ;
la notification (208), à la BS, d'au moins un résultat de mesure de l'au moins une condition radio sur la DL ; et
la réception (210) de détails de configuration de transfert assisté provenant de la BS, les détails de configuration de transfert assisté comprenant l'assignation, par la BS, d'un noeud de tête local pour une session de diffusion individuelle en cours ou une session de diffusion groupée en cours sur la base de l'au moins un résultat de mesure de l'au moins une condition radio sur la DL.

12. Procédé selon la revendication 11, comprenant en outre la réception de détails de configuration d'établissement de ressources sur la liaison latérale, SL, provenant du noeud de tête local, et la fourniture d'informations de trafic V2X sous forme d'informations d'assistance d'UE, UEAI, et/ou d'un rapport d'état de tampon, BSR, sur la base d'une requête provenant du noeud de tête local, le noeud de tête local étant soit au moins une unité de bord de route, RSU, de proximité soit un UE membre de groupe du groupe d'UE.

13. Procédé selon la revendication 12, comprenant en outre la réception d'un état d'utilisation et de réservation de ressources sur la SL par diffusion périodique, par le noeud de tête local, des détails de configuration d'établissement de ressources sur la SL.

14. Procédé selon l'une quelconque des revendications 11 à 13, comprenant en outre la réception d'au moins un signal et un canal sur la SL provenant d'au moins une RSU de proximité et/ou d'un UE membre de groupe du groupe d'UE, les au moins un signal et un canal sur la SL comprenant un signal de synchronisation sur la liaison latérale, SLSS, un signal de référence de démodulation, DMRS, pour un canal physique de diffusion sur la liaison latérale, PSBCH, un canal physique de commande sur la liaison latérale, PSCCH, un canal physique partagé sur la liaison latérale, PSSCH, et un signal et un canal de découverte.

15. Procédé selon la revendication 14, comprenant en outre la surveillance d'au moins une condition radio sur la SL par mesure d'au moins une deuxième intensité et/ou une deuxième puissance de signal reçues/reçue sur la base des au moins un signal et un canal sur la SL transmis par l'au moins une RSU de proximité et/ou un UE membre de groupe du groupe d'UE.
